# EUROPEAN PATENT APPLICATION

(11) **EP 4 818 049 A1**
(43) Date of publication of application: **07.10.2026**
(21) Application number: 24925725.4
(22) Date of filing: 23.12.2024
(51) Int. Cl.: B64D 33/08

(54) **HEAT DISSIPATION SYSTEM**

(30) Priority: 22.02.2024 JP 2024025157
(71) Applicant: Mitsubishi Heavy Industries, Ltd., Chiyoda-ku Tokyo 100-8332 (JP)
(72) Inventor: HARADA, Takuya, Tokyo 100-8332 (JP); MARUYAMA, Takamasa, Tokyo 100-8332 (JP)
(74) Representative: Hoffmann Eitle
(86) International application number: PCT/JP2024/045393
(87) International publication number: WO 2025/177691

(57) **Abstract**

A heat dissipation system that dissipates heat generated in an aircraft, the aircraft including an intake flow path through which air taken in from an intake duct flows toward an engine, includes: a heat exchanger that is provided in a space formed between the intake flow path and the engine, and that is fixed to an inner wall side of the intake flow path with a gap provided between the heat exchanger and the engine. The intake flow path has a circular flow path cross section, and the heat exchanger is provided in an arc shape along an inner wall of the intake flow path.

## Description

### Technical Field

The present disclosure relates to a heat dissipation system for an aircraft.

### Background Art

In the related art, as a heat dissipation system for an aircraft, an aircraft-mounted refrigeration system in which a heat exchanger is disposed in an overboard discharge port for discharging pressurized air inside the aircraft is known (for example, see PTL 1).

### Citation List

### Patent Literature

[PTL 1] Japanese Unexamined Utility Model Registration Application Publication No. 1-144763

### Summary of Invention

### Technical Problem

Electronic equipment mounted on an aircraft is required to have improved performance, and as the amount of heat generated increases with the improvement in performance, the required cooling performance increases. In order to increase the cooling performance, it is necessary to increase the opening of an intake port provided in the aircraft to increase the amount of air taken into the aircraft. However, when the opening of the intake port is increased, there is a possibility that the flight performance of the aircraft may deteriorate.

Therefore, an object of the present disclosure is to provide a heat dissipation system capable of appropriately dissipating heat generated in an aircraft while suppressing a deterioration in flight performance of the aircraft.

### Solution to Problem

A heat dissipation system of the present disclosure is a heat dissipation system that dissipates heat generated in an aircraft, the aircraft including an intake flow path through which air taken in from an intake duct flows toward an engine, and the heat dissipation system includes a heat exchanger that is provided in a space formed between the intake flow path and the engine, and that is fixed to an inner wall side of the intake flow path with a gap provided between the heat exchanger and the engine.

### Advantageous Effects of Invention

According to the present disclosure, it is possible to appropriately dissipate heat generated in an aircraft while suppressing a deterioration in flight performance of the aircraft.

### Brief Description of Drawings

FIG. 1 is a diagram related to a heat dissipation system according to a first embodiment.
FIG. 2 is a side view schematically showing a periphery of a heat exchanger of the heat dissipation system.
FIG. 3 is a cross-sectional view schematically showing a periphery of the heat exchanger of the heat dissipation system.
FIG. 4 is a diagram related to a heat dissipation system according to a second embodiment.

### Description of Embodiments

Embodiments according to the present disclosure will be described in detail below with reference to the drawings. Note that this disclosure is not limited to the embodiment. Further, components in the following embodiments include those that can be easily replaced by those skilled in the art or those that are substantially the same. Further, the components described below can be combined as appropriate, and in a case where there are a plurality of embodiments, the respective embodiments can also be combined.

### [First Embodiment]

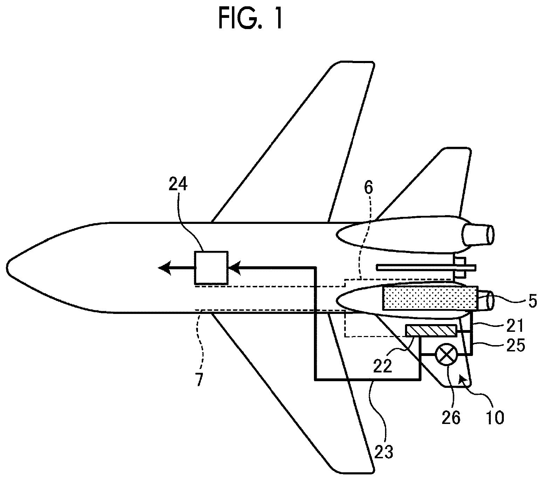

A heat dissipation system according to a first embodiment is a system for discharging heat generated in an aircraft. The heat dissipation system will be described with reference to FIG. 1.

### (Thermal Management System)

FIG. 1 is a diagram related to a heat dissipation system according to the first embodiment. As shown in FIG. 1, a heat dissipation system 10 is, for example, an air cycle system (ACS). The heat dissipation system 10 is a system that bleeds air taken into an engine 5 of the aircraft, cools the bled bleed air, and then supplies the cooled bleed air toward a pressurized compartment in the aircraft as conditioned air.

The heat dissipation system 10 includes a bleed air line 21, a heat exchanger 22, an air supply line 23, a cooling system 24, a bypass line 25, and a flow control valve 26.

The bleed air line 21 is a line from the engine 5 to the heat exchanger 22, and is a flow path through which the air bled from the engine 5 flows to the heat exchanger 22. The heat exchanger 22 is a heat exchanger that cools the air bled via the bleed air line. The heat exchanger 22 is attached to an engine bay 6 that accommodates the engine 5. The engine bay 6 is connected to an intake duct 7 of the aircraft, and is a part of an intake flow path through which air flows from the intake duct 7 toward the engine 5.

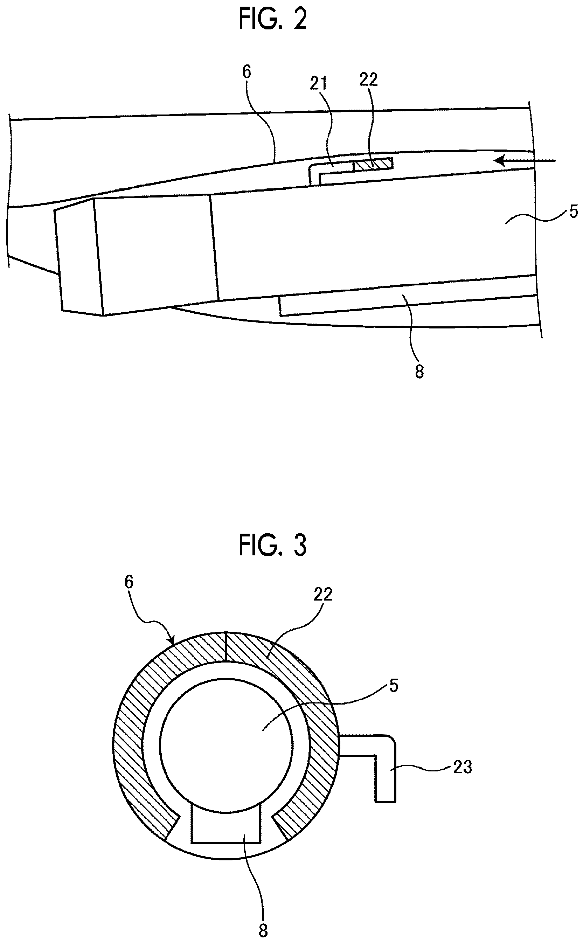

Here, the disposition of the heat exchanger 22 will be described with reference to FIGS. 2 and 3. FIG. 2 is a side view schematically showing a periphery of the heat exchanger of the heat dissipation system. FIG. 3 is a cross-sectional view schematically showing a periphery of the heat exchanger of the heat dissipation system. FIG. 2 is a section taken along an air flow direction, and FIG. 3 is a cross section taken along a plane orthogonal to the air flow direction. As shown in FIG. 2, the heat exchanger 22 is disposed in a space formed between the engine bay 6 and the engine 5, and is fixed to an inner wall side of the engine bay 6. Therefore, a gap is formed between the heat exchanger 22 and the engine 5, and air flows through the gap.

In addition, as shown in FIG. 3, the engine bay 6 has a circular flow path cross section. The heat exchanger 22 is provided in an arc shape along the inner wall of the engine bay 6. In this case, a component 8 attached to the engine 5 is provided to protrude to a lower side (lower side in FIG. 3) of the engine 5. Therefore, the heat exchanger 22 is provided from one side surface of the engine bay 6 to the other side surface thereof via the upper side thereof, in an arrangement avoiding the component 8. The heat exchanger 22 may be divided into a plurality of parts, and may be divided into left and right parts around a part of information of the engine bay 6, for example.

In addition, in the first embodiment, the single heat exchanger 22 is disposed in the engine bay 6, but a plurality of heat exchangers 22 may be disposed in the engine bay 6. The plurality of heat exchangers 22 may include a water-cooled heat exchanger through which a liquid-phase refrigerant flows, an air-cooled heat exchanger through which a gas-phase refrigerant flows, and an oil-cooled heat exchanger through which oil such as lubricating oil and hydraulic oil flows. In this case, the water-cooled heat exchanger is mainly used at 100°C or lower, which is the boiling point of water, whereas the bleed air passing through the air-cooled heat exchanger is often at 100°C or higher. Therefore, efficient cooling can be performed by disposing the water-cooled heat exchanger on the upstream side in the air flow direction of the engine bay 6.

The above-described heat exchanger 22 cools the air flowing through the bleed air line 21 by performing heat exchange between the air flowing through the bleed air line 21 and the air taken in from the intake duct 7.

The air supply line 23 is a line from the heat exchanger 22 to the pressurized compartment, and is a flow path through which the air discharged from the heat exchanger 22 flows to the pressurized compartment. The pressurized compartment is provided with electronic equipment serving as a heat-generating source generating heat in the aircraft, and the air supplied to the pressurized compartment is used for cooling the electronic equipment. The cooling system 24 is provided in the air supply line 23, and cools the air flowing through the air supply line 23. The cooling system 24 is, for example, a heat exchanger that performs heat exchange with the air taken in from the intake duct 7. The air supplied to the pressurized compartment in which the electronic equipment is provided is used for temperature control of the cockpit of the aircraft and cooling of the electronic equipment, thereby appropriately dissipating the heat generated in the aircraft. Therefore, in the generation of the air for performing the temperature control of the cockpit and the cooling of the electronic equipment, since it is unnecessary to increase the opening of the intake port, as required in the related art, it is possible to appropriately dissipate the heat generated in the aircraft while suppressing a deterioration in flight performance of the aircraft.

The bypass line 25 is connected to the bleed air line 21, and is a line that bypasses the heat exchanger 22. The flow control valve 26 is provided in the bleed air line 21, and controls the flow rate of the air flowing through the bypass line 25. In a case where the temperature of the air flowing in from the intake duct 7 is high and it is difficult to sufficiently cool the air flowing through the bleed air line 21 by the heat exchanger 22, the bypass line 25 causes the air in the bleed air line 21 to flow by bypassing the heat exchanger 22.

In the heat dissipation system 10 as described above, the air taken in from the intake duct 7 and used for the engine 5 can also be used for cooling the heat exchanger 22.

### [Second Embodiment]

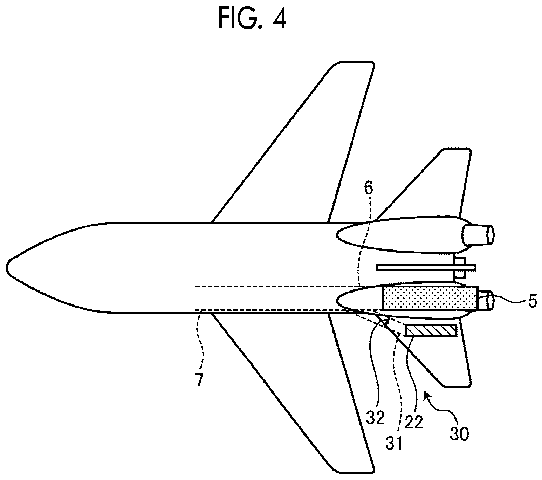

Next, a heat dissipation system 30 according to a second embodiment will be described with reference to FIG. 4. FIG. 2 is a diagram of the heat dissipation system according to the second embodiment. In the second embodiment, in order to avoid duplicate description, portions different from those in the first embodiment will be described, and portions having the same configuration as those in the first embodiment will be described with the same reference numerals.

The heat dissipation system 30 of the second embodiment is provided with the heat exchanger 22 of the heat dissipation system 10 in a branch flow path 31 that branches from the intake duct 7, and includes a movable vane 32 that controls the flow rate of the air in the branch flow path 31.

The branch flow path 31 is connected to the intake duct 7 and is disposed alongside and parallel to the engine bay 6. The movable vane 32 can adjust the cooling by the heat exchanger 22 by controlling the flow rate of the air flowing through the branch flow path 31. In addition, the movable vane 32 can reduce the pressure loss in the engine bay 6 and the branch flow path 31 by controlling the flow rate of the air flowing through the branch flow path 31. The movable vane 32 controls the flow rate of the branch flow path 31 such that the cooling required in the heat exchanger 22 can be sufficiently secured, based on the bleed air flow rate and temperature from the engine 5 and the speed and altitude of the aircraft.

As described above, the heat dissipation systems 10 and 30 described in the first and second embodiments are understood as follows, for example.

A heat dissipation system 10 according to a first aspect is a heat dissipation system 10, 30 that dissipates heat generated in an aircraft, the aircraft including an intake flow path (engine bay 6) through which air taken in from an intake duct (intake duct 7) flows toward an engine 5, and the heat dissipation system 10 includes a heat exchanger 22 that is provided in a space formed between the intake flow path and the engine 5, and that is fixed to an inner wall side of the intake flow path with a gap provided between the heat exchanger 22 and the engine 5.

According to this configuration, since the air taken in from the intake duct and used for the engine 5 can also be used for the cooling of the heat exchanger 22, it is not necessary to increase the opening of the intake port provided separately from the intake duct. Therefore, it is possible to appropriately dissipate the heat generated in the aircraft while suppressing a deterioration in flight performance of the aircraft.

As a second aspect, in the heat dissipation system 10, 30 according to the first aspect, the intake flow path has a circular flow path cross section, and the heat exchanger 22 is provided in an arc shape along an inner wall of the intake flow path.

According to this configuration, since the heat exchanger 22 is provided along the inner wall of the intake flow path, the gap between the heat exchanger 22 and the engine 5 can be suitably secured, and thus the pressure loss can be reduced.

As a third aspect, in the heat dissipation system 10, 30 according to the first or second aspect, a plurality of the heat exchangers 22 are provided, and the heat exchangers 22 include a liquid-cooled heat exchanger through which a liquid-phase refrigerant flows and an air-cooled heat exchanger through which a gas-phase refrigerant flows, and the liquid-cooled heat exchanger is disposed, in a case where the liquid-phase refrigerant is water, on an upstream side of the intake flow path as compared with the air-cooled heat exchanger.

According to this configuration, since the temperature of the air on the upstream side of the intake flow path is lower than that on the downstream side, the liquid-cooled heat exchanger can be further cooled.

As a fourth aspect, the heat dissipation system 30 according to any one of the first to third aspects further includes a movable vane 32 that guides the air toward the heat exchanger 22.

According to this configuration, the cooling by the heat exchanger 22 can be adjusted by controlling the flow rate of the air supplied toward the heat exchanger 22, and the pressure loss in the intake flow path can be reduced.

### Reference Signs List

5: Engine
6: Engine bay
7: Intake duct
8: Component
10: Heat dissipation system
21: Bleed air line
22: Heat exchanger
23: Air supply line
24: Cooling system
25: Bypass line
26: Flow control valve
30: Heat dissipation system
31: Branch flow path
32: Movable vane

## Claims

1. A heat dissipation system that dissipates heat generated in an aircraft, the aircraft including an intake flow path through which air taken in from an intake duct flows toward an engine, the heat dissipation system comprising:
a heat exchanger that is provided in a space formed between the intake flow path and the engine, and that is fixed to an inner wall side of the intake flow path with a gap provided between the heat exchanger and the engine.

2. The heat dissipation system according to Claim 1,
wherein the intake flow path has a circular flow path cross section, and
the heat exchanger is provided in an arc shape along an inner wall of the intake flow path.

3. The heat dissipation system according to Claim 1,
wherein a plurality of the heat exchangers are provided, and the heat exchangers include a liquid-cooled heat exchanger through which a liquid-phase refrigerant flows, and an air-cooled heat exchanger through which a gas-phase refrigerant flows, and
the liquid-cooled heat exchanger is disposed, in a case where the liquid-phase refrigerant is water, on an upstream side of the intake flow path as compared with the air-cooled heat exchanger.

4. The heat dissipation system according to Claim 1, further comprising:
a movable vane that guides the air toward the heat exchanger.
